# EUROPEAN PATENT SPECIFICATION

(11) **EP 3 153 758 B1**
(45) Date of publication and mention of the grant of the patent: **19.02.2020**
(21) Application number: 16193017.7
(22) Date of filing: 10.10.2016
(51) Int. Cl.: F16L 39/00

(54) **BUNDED PIPE SYSTEMS**
GEBÜNDELTE ROHRSYSTEME
SYSTÈMES DE TUYAUX DE RÉTENTION

(30) Priority: 08.10.2015 GB 201517854
(43) Date of publication of application: 12.04.2017
(73) Proprietor: Fuel Storage Solutions Limited, Bradford West Yorkshire BD13 3JB (GB)
(72) Inventor: BARNETT, Jonathan, Bradford Yorkshire BD14 6PY (GB)
(74) Representative: Caldwell, Judith Margaret

(56) References cited:
- WO-A2-2013/052639
- DE-A1- 10 054 822
- GB-A- 2 493 545
- US-A- 3 988 029
- US-A- 5 141 261
- US-B1- 8 820 794

## Description

### TECHNICAL FIELD

The present invention relates to bunded pipe systems for transfer of hazardous fluids and to fittings for use in such systems. More specifically, the invention relates to a method of installing a bunded pipe system *in situ.*

### BACKGROUND

Pipe-in-pipe systems, otherwise known as bunded pipe systems, are increasingly used for conveying fuel or other such hazardous and/or flammable liquids from storage tanks to dispensing pumps or appliances supplied with the liquid. The liquid is conveyed through an inner or primary pipe, and an outer or secondary pipe serves to protect the inner pipe so that in the event of fracture or other such breach of the inner pipe, liquid leaking from the inner pipe may be contained within the outer pipe. Further, when the interstitial space between the outer and inner pipes is closed or sealed, the pressure within the space may be monitored and any change in pressure may indicate the presence of a leak within the system. The pressure monitoring can be coupled to an alarm system which is triggered if the pressure drops. In that event, action may be taken to make the system safe and repair the breach in the inner pipe. As such, bunded pipe systems offer an environmentally sound means for conveying hazardous liquids. For similar reasons, bunded pipe systems may also be used to distribute gases.

While use of plastic bunded pipework is known, for example high density polyethylene (HDPE) is commonly used in bunded systems, due to the fact that such pipes would melt in the event of a fire allowing fuel or other hazardous fluid to leak out and potentially cause an explosion, plastic bunded pipework is of limited application and generally for external use only. By contrast, steel pipes are able to withstand higher temperatures and hence are often specified for internal use in order to meet building fire safety requirements.

A problem exists however when pipe runs have to be altered, for example, during refurbishment of buildings where the appliances they are serving may be relocated. In such situations it is highly impractical and hence rare for the tanks themselves to be relocated; these can be substantial containers for accommodating several thousand litres of fuel. Similarly, use of temporary storage tanks is difficult due to space constraints and they are costly to install. Replacement and alteration of pipework may therefore need to take place whilst the fuel remains in the tanks, especially if part of a back-up generator system. As will be appreciated, installing or altering steel pipework on site while fuel is present in the vicinity would be extremely hazardous since this invariably has involved welding. Such hot works are not permitted around fuel. Welding is also an intrusive process due the creation of smoke, vapour and noise, and can be time consuming. Often, such work must be undertaken "out of hours" to avoid any negative impact on the surrounding business.

While there are advantages in use of bunded steel pipework, it is not a versatile system to work with when changes are required. Bunded steel pipework cut by adopting hot works (potentially causing sparks and combustion) is hazardous and therefore the only truly safe way to modify a steel pipe run after installation and filling the system with fuel has been to drain and inert the fuel lines, along with the associated pumps and bulk storage tanks.

Occasionally some of this impact can be reduced by the use of flexible steel- in-steel pipes, but as these are not rigid pipes the pressure between the pipes cannot be accurately monitored for leakage, for example because the pipework does not have a fixed "interstitial" gap between the pipes where a pressure can be created. In addition, as the flexible steel pipework is typically in the form of braided steel hosing it still needs to be cut and measured before assembly on site. Once again, as detailed above, this is a costly process.

United States Patent No. 5,259,651 describes a double wall compression fitting for attachment to a double wall pipeline system made of extruded plastic. The fitting includes inner and outer housings and a separate compression connecting assembly. Joining of the pipes involves using screw threads on the pipes along with a connecting assembly to seal the pipes together in a mechanical joint via the mechanical tightening of the threads. In another embodiment, a connecting assembly is tightened onto pipes to be connected in a mechanical joint by the additional use of band clamp components.

United States Patent No. 5,141,161 describes a double containment pipe joint assembly with an inner pipe and an outer or containment pipe secured in concentric relation. The pipe joint assembly includes a fitting having end surfaces on concentric flanges which can be secured to a length of a primary and containment pipe at intervals along the pipeline wherein sections of the pipeline can be removed and repaired without the necessity of removing the whole pipeline. The concentric flanges are joined by a thickened divider ring which provides smooth fillets at its juncture with the flanges to reduce thermal stresses on the fitting.

United Kingdom Patent Application No. 2,493,545 describes a T-piece preformer' for forming a T-piece in a pipe-in-pipe pipeline for laying in a marine environment. The T-piece preformer comprises at least inner and outer longitudinal collars; one or more annular walls extending between the inner and outer collars; one or more cable apertures through each annular wall; and one or more guide points on the outer collar radially offset from the or each cable apertures, able to provide guidance for a hole into the T-piece preformer from outside the outer collar to within the inner collar.

Accordingly, it is an object of the present invention to provide an improved method of installing a bunded pipe system for conveying hazardous fluids *in situ.* Alternatively, or in addition thereto, it is an object of the invention to provide a bunded pipe system capable of *in situ* installation and adapted for interstitial monitoring for leak detection.

### SUMMARY OF THE INVENTION

From a first aspect, the invention resides in a method of installing a bunded pipe system for transfer of hazardous fluids, the method comprising:
providing one or more fittings for terminating or splitting pipes in a bunded steel pipe run, each said fitting comprising an inner tubular steel member for joining to an end of the inner steel pipe of a bunded pipe and an outer tubular steel member at least partially surrounding the inner tubular member and spaced therefrom for joining to the outer steel pipe of the bunded pipe, each end of the inner tubular steel member of the fitting extending beyond the corresponding end of the outer tubular steel member;
joining the inner tubular steel member to the inner tubular pipe of a bunded pipe; and joining the outer tubular steel member to the outer pipe of the bunded pipe;
wherein the inner and outer tubular steel members are joined respectively to the inner and outer bunded pipes *in situ* in a cold process by inserting an end portion of each pipe into an end portion of each tubular steel member, or vice versa, to provide a male-female coupling and applying pressure at a plurality of points around the female coupling where it overlaps with the male coupling to compress the female coupling against the male coupling to form a crimped seal therebetween.

By means of the invention, it is possible to install pipe runs of a bunded pipe system *in situ* without application of heat, specifically by crimping. Thus the method avoids the hazards associated with hot processes, such as welding. Further, the resulting crimped seal is a nonmechanical joint, requiring no additional components, such as adhesives or band clamps. The method therefore also allows the jointing to be achieved in one fluid motion without the need for mechanical assembly or tightening of components. In this way, this process can be carried out on site in a rapid, efficient and, importantly, safe manner.

The term "installing" as used herein is intended to include modification and repair of existing bunded pipe systems, as well creating installing new bunded pipe systems from scratch at a new facility, such as a fuel storage facility. Evidently, the method of the invention is especially advantageous when utilised to alter or repair an existing facility where hazardous fluids may already be present in the system.

The term "cold process" as used herein refers to a process in which heat is not applied, thus it is a process that is performed under ambient temperature.

In the method of the invention, the application of pressure around the female coupling may conveniently be provided by means of a compression tool, for example, a hand held crimping tool. Such crimping tools are known and may be powered by hydraulic or pneumatic means. In a preferred method, the pressure may be applied via a collar placed around the female coupling. Upon exerting pressure around the female coupling, the female coupling is deformed and compressed onto the underlying male coupling, resulting in a crimped seal.

From another aspect, the invention resides in a pipe connector for joining *in situ* to a bunded pipe run of a bunded pipe system for transfer of hazardous fluids, the fitting comprising an inner multi-way steel pipe connector comprising a plurality of ends for joining to a plurality of inner pipes by crimping to combine or split a fluid flow through said pipes and an outer multi-way steel pipe connector of the same configuration as the inner connector and integrally bunded therewith and comprising a plurality of ends for joining to a plurality of outer pipes by crimping, the dimensions of the outer connector being greater than the dimensions of the inner connector to provide an interstitial gap between the inner and outer connectors and between the inner and outer pipes when fitted to the respective connectors for enabling pressure monitoring between the inner and outer pipes when the gap between the inner and outer pipes forms part of a closed system. One or more O-rings are carried within one or more of the ends for joining by crimping, and one or more of the ends for joining by crimping are flared for ease of insertion of the pipe to be joined.

In a preferred arrangement, the pipe connector fitting may be a T-shaped fitting or a Y-shaped fitting, more preferably a T-shaped fitting.

The inner connector may be manufactured with the desired connector arm length, or may be produced by attaching a requisite length of pipe to an off-the-shelf steel connector. As the inner connector is likely to be fabricated off-site, the additional length of pipe fitted to provide a desired crimping portion may be joined to the basic connector by compression jointing, crimping or welding.

In order that the interstitial gap between the inner and outer connectors remains constant, thereby avoiding pressure fluctuations caused by relative movement between the connectors which may inadvertently trigger a leak alarm system, the bunded fitting preferably further comprises a spacer member for fixing the position of the inner connector with respect to the outer connector.

Preferably, the spacer member has an outer diameter the same as or substantially similar to the inner wall diameter of the outer connector arm where it is to be fitted, and an inner diameter the same as or substantially similar to the outer wall diameter of the inner connector arm at the same fitting position. In particular, it is preferred that the spacer members are precision cut, such as by laser means, to provide inner and outer diameters of an exact size to grip both the inner and outer connectors for retaining the inner and outer connectors at the desired spacing. It will be appreciated that the each of the connector arms of the inner and outer connectors respectively may not share the same diameter, for example, multi-way pipe connectors are frequently used to connect pipes of different diameters. A range of spacers may be provided to cater for the different pipe diameters and the resulting gap. The spacers are preferably shaped to enable air or other pressurising gas, and leaking fluid to flow through the interstitial gap. For example, the spacers may comprise annular members provided with apertures therethrough, or one or both of the inner or outer circumferences may be castellated.

Spacers may also be used in conjunction with the bunded steel pipes to fix the position of the inner pipe within the outer pipe, this also being advantageous to avoid pressure fluctuations caused by relative movement between the inner and outer pipes.

Also described herein is a process of making a bunded multi-way connector for use in the installation method, the process comprising providing a first multi-way steel pipe connector for joining to a plurality of inner pipes to combine or split a fluid flow through said pipes and a second multi-way steel connector having the same configuration as but dimensions greater than the first connector, wherein the second connector is cut along the intersection where each connector arm of the second connector meets an adjoining arm, separating the resulting cut pieces to permit the arms of the first connector to be inserted into the separated arms of the second member, bringing the cut pieces together so that they are in contact with each other along the intersections and welding the re-assembled second connector along the intersections to capture the arms of the first connector within the arms of the second connector.

When the bunded multi-way connector provides a T-fitting or a Y-fitting, the second steel connector is cut into three sections. In the case of a T-shaped connector, the second connector is cut twice, the first cut severs the arm that is at 90° to the remaining two arms, and the remaining two arms are severed by cutting normal to the first cut. Cutting in this order is preferred as it is easier to hold the T-fitting in a vice whilst both cuts are made. Cutting in the reverse order is however possible.

In a preferred arrangement, the connector arms of the first connector are extended, such as by joining pipe lengths to the distal end of the connector arms, such that once the extended arms are inserted into the separated arms of the second connector and the separated arms are rejoined, the extended arms project beyond the distal ends of the arms of the second connector. Joining the pipe lengths to the first connector to extend the arm lengths may be performed by compression jointing, crimping or welding, or by any other suitable method.

When spacers are used to fix the interstitial gap between the first and second connectors, these may be fitted over the outer diameters of the first connector arms prior to inserting the arms into the separated arms of the second connector.

Following manufacture, the multi-way bunded steel connector may be tested to ensure compliance with requisite standards. Such testing preferably includes one or all of (i) a visual inspection to check for any defects in the manufacturing process, (ii) a pressure test, typically carried out at a vacuum of 20mB, to ensure the connector's integrity, and (iii) an ultrasonic thickness test to ensure that the welds in the outer connector are consistent and substantially even across the full length of the weld. When the connectors are deemed to meet the standards, a 10-year warranty may be issued.

From yet another aspect, the invention resides in a pipe finisher fitting for use in the method according to the first aspect, the pipe finisher fitting comprising an inner steel tube having a first end for joining to an inner steel pipe of the bunded system by crimping, to convey fluid from a fluid store through the tube and a second end for joining to a steel delivery pipe by crimping to convey the fluid from the tube to a delivery destination, the pipe finisher further comprising an outer steel reducing tube having a first end for joining to an outer steel pipe of the bunded system by crimping and a second end of reduced diameter relative to the first end and sealed around the inner steel tube for closing the bunded system where the fitting is installed to enable pressure monitoring of the interstitial gap between the inner and outer pipes. One or more O-rings are carried within one or more of the ends for joining by crimping; and one or more of the ends for joining by crimping are flared for ease of insertion of the pipe to be joined.

By means of this further aspect of the invention, it is possible to terminate bunded steel pipe runs to create a sealed, bunded system. Such a pipe finisher is connected to the end of a pipe run by crimping. Thus even though a pipe finisher may need to be installed at an end of a pipe run, including adjacent to a fuel storage tank or a tank containing other hazardous fluids, the connection can be made safely using a cold process.

In a preferred arrangement, the first end of the inner steel tube of the pipe finisher extends beyond the first end of the outer reducing tube to facilitate joining of the finisher using a crimping process. In particular, the projecting first end of the inner tube is readily accessible for crimping to the inner pipe in a bunded pipe run.

Consistent with the multi-way connector as hereinbefore described, the interstitial gap present between the inner and outer steel tubes may be fixed by means of one or more spacer members. Accordingly, the spacer members referred to hereinbefore may be included as part of the pipe finisher.

The outer reducing tube of the pipe finisher fitting may comprise a section of a conventional reducing fitting used to take a larger pipe down to a smaller bore pipe. Such a conventional fitting comprises a wider bore section and a narrower bore section with a section of tapering cross-section in between. Accordingly, the outer reducing tube may comprise the wider bore section and the tapering section, the narrower bore section having been severed therefrom, with the end of the tapering section being welded to the inner tube.

Advantageously, the second end of the inner steel tube of the pipe finisher also projects beyond the second, reduced diameter end of the reducing tube. Again, by means of the extended portion, joining of the finisher to a further pipe run, for example, to convey fluid to a delivery point outside of the bunded system is facilitated.

Pipe finisher fittings according the invention may be installed at both ends of a bunded pipe run thereby providing a closed system in which the interstitial gap can be pressurised. Such a closed system makes it possible to monitor pressure in the interstitial gap and hence detect possible leaks in the system when the pressure changes.

In another embodiment, the outer reducing tube of the pipe finisher comprises a sealable port for introducing a pressurising gas to enable detection of a leak in a bunded pipe run when the finisher is in use in a bunded system.

The sealable port may be created in the severed reducing fitting, for example, by cutting an aperture through the outer reducing tube, preferably along a tapering portion thereof, and welding a female threaded socket into the aperture. The socket then provides a sealable entry point for allowing gas to be pumped into the interstitial gap when the pipe finisher is in use in a bunded system. More particularly, the gas can be pressurised and the pressure maintained by sealing the port. Such a pipe finisher is typically manufactured off-site but fitted *in situ* by crimping.

When in use in a bunded system, the system and/or method preferably includes installing a pressure monitor and linking the monitor to an alarm, whereby pressure within the interstitial gap may be monitored and a warning issued in the event that the monitor detects a change in pressure within the gap. The alarm may be activated when the pressure change exceeds a certain predetermined value, indicating that there is potentially a leak within the bunded system.

It will be appreciated that within a bunded system two pipe finishers may be included, one fitted at either end of a bunded pipe run. It is not necessary for both finishers to carry a test port however.

Also described herein is a method of making a pipe finisher fitting for installation in a bunded pipe system, comprising providing an inner steel tube having a first end for joining to an inner pipe of a bunded pipe by crimping, and a second end, providing an outer steel reducing tube having a first end for joining to an outer steel pipe of the bunded pipe by crimping, and a second end of reduced diameter, sealing the second end of the outer reducing tube around the inner steel tube adjacent the inner tube second end.

When the outer steel tube is derived from a conventional reducing fitting having a wider bore section and a narrower bore section with a section of tapering cross-section in between, the method of the invention preferably comprises severing the narrower bore section prior to sealing, such as by welding, the narrower end of the tapering around the inner steel tube.

Advantageously, the method further comprises providing a sealable aperture through the outer steel tube.

From yet another aspect, the invention resides in a kit of parts for installing a bunded steel pipe system comprising at least one steel pipe finisher fitting as hereinbefore described and at least one multi-way steel connector as hereinbefore described, and a crimping tool.

### BRIEF DESCRIPTION OF THE DRAWINGS

Aspects of the present invention will now be described, by way of example only, with reference to the accompanying drawings in which:
Figures 1a and 1b show alternative end finishers, each with a test port and spacers, in accordance with an aspect of the invention;
Figure 2 shows an end finisher without a test port in accordance with another aspect of the invention;
Figure 3 shows a T-shaped pipe connector in accordance with another aspect of the invention;
Figure 4 illustrates the cutting of a T-shaped fitting for providing the outer multi-way connector of a pipe connector as shown in Figure 3;
Figure 5 illustrates the separated elements of the fitting of Figure 4;
Figure 6 illustrates the re-assembled elements of the fitting of Figure 4 when fitted over an extended inner T-shaped steel connector;
Figure 7 illustrates manufacture by cutting of an outer reducing steel tube for a pipe finisher as shown in Figure 2;
Figure 8 illustrates the separated outer reducing steel tube after cutting; and
Figure 9 illustrates an assembled steel pipe finisher using the separated reducing steel tube of Figure 8 and an inner steel tube.

### DETAILED DESCRIPTION

The accompanying drawings describe three fittings for use in the present invention. These are an integrally bunded T-piece, an integrally bunded end fitting and an integrally bunded end fitting with a test port. The "end" fittings enable reduction down from pipe-in-pipe to a single pipe. On the end fitting with the test port, the test port is added to the finisher so that the interstitial gap can be pressurised thereby enabling the pipework to be pressure tested constantly (for leak detection purposes).

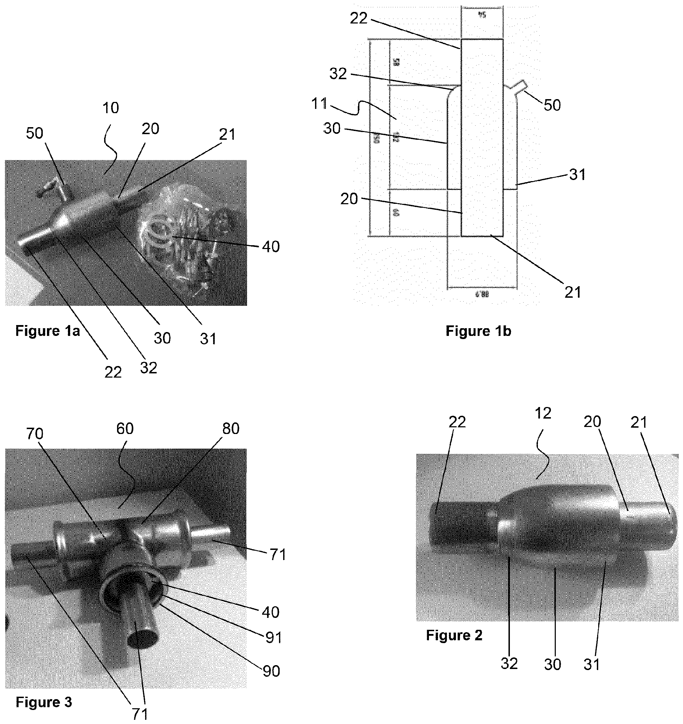

Figure 1a illustrates an embodiment of the invention showing an internal end finisher (10) comprising an inner steel tube or pipe (20) (e.g. a 28mm diameter pipe) having a first end (21) for joining to an inner pipe of a bunded pipe by crimping, and a second end (22), for joining to a non-bunded pipe system, and also comprising an outer steel reducing tube (30) having a first end (31) for joining to an outer steel pipe of a bunded pipe system by crimping, and a second end of reduced diameter (32), sealing the second end of the outer reducing tube around the inner steel tube adjacent the inner tube second end. The first end of the inner pipe (21) extends beyond the end of the first end (31) of the outer reducing pipe (30) to facilitate joining to the inner pipe of a bunded pipe system by crimping.

This embodiment additionally comprises spacers (40, external for illustration) located internally between the inner (20) and outer (30) steel tubes to fix the position of the inner tube with respect to the outer tube. These spacers are profiled to enable air or other pressurising gas, and leaking fluid to flow through the interstitial gap.

Located on the end finisher (10), on the wider bore section, is a sealable test port (50) which allows the introduction of a pressurising gas to enable detection of a leak in a bunded pipe run when the finisher is in use in a closed bunded system. This port (50) may be connected to a pressure monitor (not shown) to detect change of pressure in the interstitial space of a bunded pipe system, and activate an alarm when the change in pressure exceeds a predetermined value. Suitably, this port may be a ¼" BSP ("British Standard Pipe") threaded female socket.

Figure 1b illustrates an alternative end finisher (11) of the invention consisting of an inner pipe (e.g. a 54mm diameter pipe) with test port (50) located on the tapering section of the reducing tube (30). Features analogous to those shown in Figure 1a are denoted by use of the same reference signs.

Figure 2 illustrates a further alternative end finisher (12) of the invention, with features analogous to those shown in Figures 1a and 1b. However, in this embodiment a pressurising port is not included.

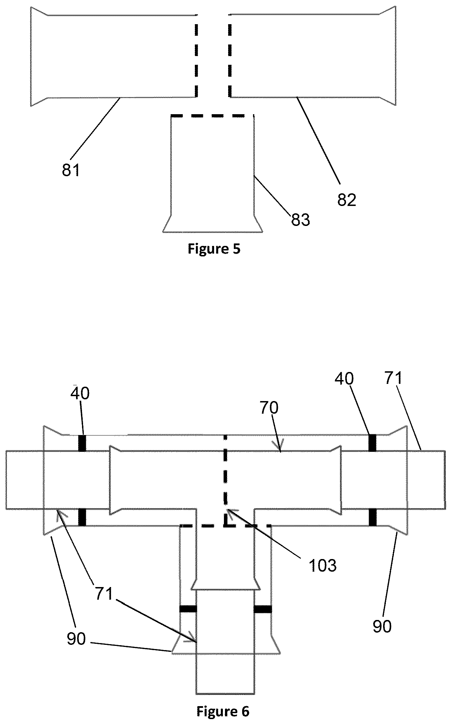

Another embodiment of the invention is shown in Figure 3 which illustrates an internal T-piece multi-way connector (60) for connecting pipes in a bunded system, comprising a first inner T-shaped multi-way steel pipe connector (70, internal, see also Figure 6) for joining to a plurality of inner pipes of a bunded system by crimping, to combine or split a fluid flow through said pipes, and a second multi-way steel connector (80) having the same configuration as but dimensions greater than the first connector, for joining to the outer pipes of a bunded system by crimping, These inner and outer connectors are separated by spacers (40) to maintain the size of the interstitial space between the inner and outer connectors.

The ends of the inner connector (70) are extended (71), such as by joining pipe lengths to the distal end of the connector arms (see also Figure 6), such that the extended arms project beyond the distal ends of the arms of the second (outer) connector.

This and other embodiments include adaptations of the ends of the pipes of the connectors shown to facilitate joining of these pipes to pipes of a bunded system by crimping. For example, the ends can be flared (90) in order to make easier insertion of the pipe to be joined, and/or an O-ring (91) can be carried within the connecting end to improve the seal made on compression of the joint during crimping. The O-ring may be made of any suitable elastomeric material.

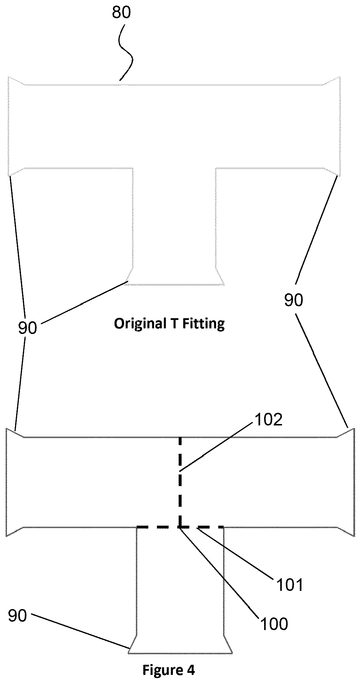

Figures 4, 5 and 6 schematically illustrate the process of manufacturing the T-Piece fitting shown in Figure 3. The outer T-piece (100) is cut twice to offer three pieces (81, 82, 83) and separated (see Figure 5). The first cut (101) severs the arm which is at 90° to the others, and the second cut (102) separates the remaining arms.

Lengths of pipe (71), to extend the inner pipe to offer sufficient pipe to crimp onto when used in the method of the invention, are then jointed to the inner T piece by compression jointing, crimping or welding, or by any other suitable method. The inner T-piece is inserted into the outer T-piece and the outer T-piece is then re-assembled over the inner T and joined back together with a welding joint (103).

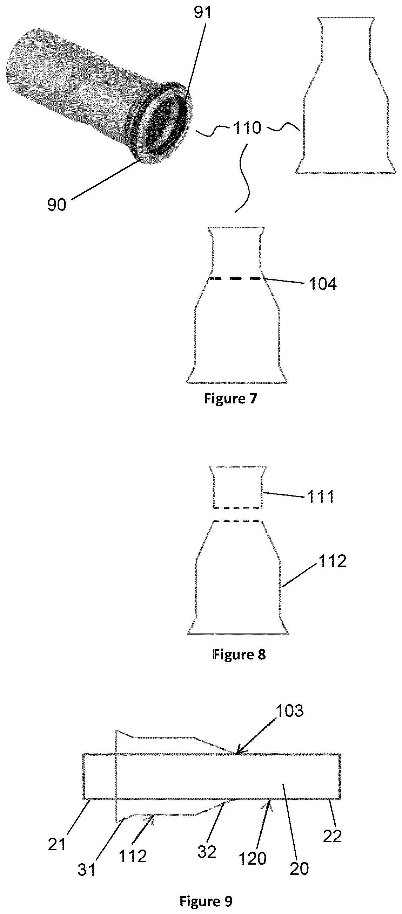

Figures 7, 8 and 9 show the process of manufacturing the finisher. The integrally bunded finisher is manufactured using a reducing fitting (110) available on the open market (to take a larger bore pipe down to a smaller bore pipe). The reducing fitting (110) is cut once (104) to offer two pieces (111, 112) which are separated (Figures 6 and 7). The larger pipe section (112) thus has an end with a larger bore and an end with a smaller bore. This pipe section (112) is placed over a length of straight pipe (120). The larger outer pipe section (112) is then welded (103) onto the straight pipe length to offer a fitting with features analogous to those in Figures 1a, 1b and 2, as shown (Figure 9).

Once the finisher has been made a threaded entry or flange may be compression fitted onto the inner pipe to terminate (Figure 9).

To manufacture a finisher with a test port as shown in Figures 1a and 1b, the finisher is cut, welded and re-assembled as per the standard finisher detailed above. In order to add the test port to this finisher a threaded female socket (e.g.¼" BSP ("British Standard Pipe")) is cut and welded onto the outer pipe. The socket goes fully through the outer pipe and a seal is created. This then provides a sealed entry to allow gas to be introduced between the inner and outer pipes (the interstitial gap). This gas is then pressurised throughout the length of the pipe run. An alarm system is added to the line and the gas pressure is monitored. If the monitoring system detects a drop in line pressure then the alarm is triggered to indicate a potential leak on the line.

Although variations to the system and fittings have been described above, other modifications may be made without departing from the inventive concept, as defined by the claims.

## Claims

1. A method of installing a bunded pipe system for transfer of hazardous fluids, the method comprising:
providing one or more fittings (10, 11, 12, 60) for terminating or splitting pipes in a bunded steel pipe run, each said fitting comprising an inner tubular steel member for joining to an end of the inner steel pipe of a bunded pipe and an outer tubular steel member at least partially surrounding the inner tubular member and spaced therefrom for joining to the outer steel pipe of the bunded pipe, each end of the inner tubular steel member of the fitting (21, 71) extending beyond the corresponding end of the outer tubular steel member;
joining the inner tubular steel member to the inner tubular pipe of a bunded pipe; and
joining the outer tubular steel member to the outer pipe of the bunded pipe;
**characterised in that** the inner and outer tubular steel members are joined respectively to the inner and outer bunded pipes *in situ* in a cold process by inserting an end portion of each pipe into an end portion of each tubular steel member, or vice versa, to provide a male-female coupling and applying pressure at a plurality of points around the female coupling where it overlaps with the male coupling to compress the female coupling against the male coupling to form a crimped seal therebetween.

2. The method of claim 1, further comprising providing one or more spacer members (40) installed between the inner and outer tubular steel member to fix the position of the inner member with respect to the outer member.

3. The method of claim 1 or claim 2, wherein the fitting provided comprises a pipe finisher (10, 11, 12) for closing the interstitial gap of bunded system in use to allow the gap to be pressurised.

4. The method of claim 3, further comprising providing the outer tubular steel member of the pipe finisher with a sealable port (50) for introducing a pressurising gas into the interstitial gap.

5. The method according to any preceding claim, wherein the fitting provided comprises a multi-way connector, such as a T-shaped connector (60), for joining to a plurality of inner pipes to combine or split a fluid flow.

6. The method according to any preceding claim, further comprising providing pressure monitoring means for monitoring pressure in the interstitial gap of the bunded system when the fittings are joined to the bunded pipes and the system closed and connecting the pressure monitoring means to the bunded pipe system.

7. The method of claim 6, wherein the pressure monitoring means is connected to an alarm system triggered by a change in the pressure monitored, the alarm system being located adjacent to and/or remote from the bunded pipe system.

8. A pipe connector fitting (60) for joining *in situ* to a bunded pipe run of a bunded pipe system for transfer of hazardous fluids, said fitting comprising:
an inner multi-way steel pipe connector (70) comprising a plurality of ends for joining to a plurality of inner pipes by crimping to combine or split a fluid flow through said pipes and
an outer multi-way steel pipe connector (80) of the same configuration as the inner connector and integrally bunded therewith, comprising a plurality of ends for joining to a plurality of outer pipes by crimping,
the dimensions of the outer connector (80) being greater than the dimensions of the inner connector (70) to provide an interstitial gap between the inner and outer connectors and between the inner and outer pipes when fitted to the respective connectors for enabling pressure monitoring between the inner and outer pipes when the gap between the inner and outer pipes forms part of a closed system;
**characterised in that**:
one or more O-rings (91) are carried within one or more of the ends for joining by crimping; and
one or more of the ends for joining by crimping are flared for ease of insertion of the pipe to be joined

9. A pipe finisher fitting (10, 11, 12) for joining *in situ* to a bunded pipe run of a bunded pipe system for transfer of hazardous fluids, said fitting comprising:
an inner steel tube (20) having a first end (21) for joining to an inner steel pipe of the bunded system by crimping to convey fluid from a fluid store through the tube and a second end (22) for joining by crimping to a steel delivery pipe to convey the fluid from the tube to a delivery destination, and
an outer steel reducing tube (30) having a first end (31) for joining by crimping to an outer steel pipe of the bunded system and a second end (32) of reduced diameter relative to the first end and sealed around the inner steel tube for closing the bunded system where the fitting is installed to enable pressure monitoring of the interstitial gap between the inner and outer pipes;
**characterised in that**
one or more O-rings (91) are carried within one or more of the ends for joining by crimping; and
one or more of the ends for joining by crimping (90) are flared for ease of insertion of the pipe to be joined.

10. A pipe finisher fitting (10, 11, 12) according to claim 9, further comprising a sealable port (50) for introducing a pressurising gas into the interstitial gap.

11. A pipe connector fitting (60) according to claim 8, or a pipe finisher fitting (10, 11, 12) according to claim 9, further comprising a spacer member (40) installed between the inner and outer tubular steel member to fix the position of the inner member with respect to the outer member.

12. A kit of parts for installing a bunded pipe system in a facility for transferring hazardous fluids, said kit comprising one or more of a pipe connector fitting (60) as claimed in claim 8 and a pipe finisher fitting (10, 11, 12) as claimed in claim 9 or claim 10, and a crimping tool.

## Patentansprüche

1. Verfahren zum Verlegen eines doppelwandigen Rohrsystems zum Überführen von gefährlichen Fluiden, wobei das Verfahren Folgendes umfasst:
Bereitstellen eines oder mehrerer Fittings (10, 11, 12, 60) zum Abschließen oder Spalten von Rohren in einem doppelwandigen Stahlrohrlauf, wobei jedes Fitting ein inneres rohrförmiges Stahlelement zum Verbinden mit einem Ende des inneren Stahlrohrs eines doppelwandigen Rohres und ein äußeres rohrförmiges Stahlelement, das das innere rohrförmige Element wenigstens teilweise umschließt und davon beabstandet ist, zum Verbinden mit dem äußeren Stahlrohr des doppelwandigen Rohres umfasst, wobei sich jedes Ende des inneren rohrförmigen Stahlelements des Fittings (21, 71) über das entsprechende Ende des äußeren rohrförmigen Stahlelements hinaus erstreckt;
Verbinden des inneren rohrförmigen Stahlelements mit dem inneren rohrförmigen Rohr eines doppelwandigen Rohres; und
Verbinden des äußeren rohrförmigen Stahlelements mit dem äußeren Rohr des doppelwandigen Rohres;
**dadurch gekennzeichnet, dass** das innere und das äußere rohrförmige Stahlelement jeweils mit dem inneren und dem äußeren doppelwandigen Rohr *in situ* in einem kalten Vorgang verbunden werden, indem ein Endabschnitt jedes Rohres in einen Endabschnitt jedes rohrförmigen Stahlelements eingeführt wird, oder umgekehrt, um eine Stecker-Buchse-Kopplung bereitzustellen, und Druck an mehreren Punkten um die Buchsen-Kopplung herum auszuüben, wo sie mit der Stecker-Kopplung überlappt, um die Buchsen-Kopplung gegen die Stecker-Kopplung zu drücken, um dazwischen eine gepresste Dichtung auszubilden.

2. Verfahren nach Anspruch 1, ferner umfassend das Bereitstellen eines oder mehrerer Abstandsrohrelemente (40), die zwischen dem inneren und dem äußeren rohrförmigen Stahlelement verlegt sind, um die Position des inneren Elements in Bezug auf das äußere Element zu befestigen.

3. Verfahren nach Anspruch 1 oder 2, wobei das bereitgestellte Fitting einen Rohrfertiger (10, 11, 12) zum Schließen des Zwischenspalts des doppelwandigen Systems in Verwendung umfasst, um zuzulassen, dass der Spalt unter Druck gesetzt wird.

4. Verfahren nach Anspruch 3, ferner umfassend das Bereitstellen des äußeren rohrförmigen Stahlelements des Rohrfertigers mit einer abdichtbaren Öffnung (50) zum Einleiten eines Druckgases in den Zwischenspalt.

5. Verfahren nach einem der vorhergehenden Ansprüche, wobei das Fitting ein Mehrweganschlussstück, wie etwa ein T-förmiges Anschlussstück (60), zum Verbinden mit mehreren inneren Rohren umfasst, um einen Fluidstrom zu kombinieren oder zu spalten.

6. Verfahren nach einem der vorhergehenden Ansprüche, ferner umfassend das Bereitstellen von Drucküberwachungsmitteln zum Überwachen des Drucks in der Zwischenspaltöffnung des doppelwandigen Systems, wenn die Fittings mit den doppelwandigen Rohren verbunden sind und das System geschlossen ist, und das Verbinden der Drucküberwachungsmittel mit dem doppelwandigen Rohrsystem.

7. Verfahren nach Anspruch 6, wobei das Drucküberwachungsmittel an ein Alarmsystem angeschlossen ist, das durch eine Änderung des überwachten Drucks ausgelöst wird, wobei das Alarmsystem angrenzend an und/oder entfernt von dem doppelwandigen Rohrsystem angeordnet ist.

8. Rohranschlussstückfitting (60) zum Verbinden *in situ* mit einem doppelwandigen Rohrlauf eines doppelwandigen Rohrsystems zum Überführen von gefährlichen Fluiden, wobei das Fitting Folgendes umfasst:
ein inneres Mehrwegstahlrohranschlussstück (70), das mehrere Enden zum Verbinden mit mehreren inneren Rohren durch Pressen, um einen Fluidstrom durch die Rohre zu kombinieren oder zu spalten, und ein äußeres Mehrwegstahlrohranschlussstück (80) mit der gleichen Konfiguration wie das innere Anschlussstück umfasst und integral damit doppelwandig ist, umfassend mehrere Enden zum Verbinden mit mehreren äußeren Rohren durch Pressen, wobei die Maße des äußeren Anschlussstücks (80) größer sind als die Maße des inneren Anschlussstücks (70), um einen Zwischenspalt zwischen dem inneren und dem äußeren Anschlussstück und zwischen dem inneren und dem äußeren Rohr bereitzustellen, wenn sie an den jeweiligen Anschlussstücken angebracht sind, um eine Drucküberwachung zwischen dem inneren und dem äußeren Rohr zu ermöglichen, wenn der Spalt zwischen dem inneren und dem äußeren Rohr Teil eines geschlossenen Systems ausbildet;
**dadurch gekennzeichnet, dass**:
ein oder mehrere O-Ringe (91) innerhalb eines oder mehrerer der Enden zum Verbinden durch Pressen getragen werden; und
eines oder mehrere der Enden zum Verbinden durch Pressen konisch erweitert sind, um das Einführen des zu verbindenden Rohres zu erleichtern

9. Rohrfertigerfitting (10, 11, 12) zum Verbinden *in situ* mit einem doppelwandigen Rohrlauf eines doppelwandigen Rohrsystemes zum Überführen von gefährlichen Fluiden, wobei das Fitting Folgendes umfasst:
eine innere Stahlrohrleitung (20) mit einem ersten Ende (21) zum Verbinden mit einem inneren Stahlrohr des doppelwandigen Systems durch Pressen, um Fluid aus einem Fluidspeicher durch die Rohrleitung zu fördern, und einem zweiten Ende (22) zum Verbinden durch Pressen mit einem Stahlförderrohr, um das Fluid aus der Rohrleitung zu einem Förderziel zu transportieren, und
eine äußere Stahlreduzierrohrleitung (30) mit einem ersten Ende (31) zum Verbinden durch Pressen mit einem äußeren Stahlrohr des doppelwandigen Systems und einem zweiten Ende (32) mit reduziertem Durchmesser relativ zu dem ersten Ende und abgedichtet um die innere Stahlrohrleitung zum Schließen des doppelwandigen Systems herum, wobei das Fitting verlegt ist, um eine Drucküberwachung des Zwischenspalts zwischen dem inneren und dem äußeren Rohr zu ermöglichen;
**dadurch gekennzeichnet, dass**
ein oder mehrere O-Ringe (91) innerhalb eines oder mehrerer der Enden zum Verbinden durch Pressen getragen werden; und
**dadurch gekennzeichnet, dass** eines oder mehrere der Enden zum Verbinden durch Pressen (90) konisch erweitert sind, um das Einführen des zu verbindenden Rohres zu erleichtern.

10. Rohrfertigerfitting (10, 11, 12) nach Anspruch 9, ferner umfassend eine abdichtbare Öffnung (50) zum Einleiten eines Druckgases in den Zwischenspalt.

11. Rohranschlussstückfitting (60) nach Anspruch 8 oder Rohrfertigerfitting (10, 11, 12) nach Anspruch 9, ferner umfassend ein Abstandsrohrelement (40), das zwischen dem inneren und dem äußeren rohrförmigen Stahlelement verlegt ist, um die Position des inneren Elements in Bezug auf das äußere Element zu befestigen.

12. Bausatz von Teilen zum Verlegen eines doppelwandigen Rohrsystems in einer Einrichtung zum Überführen gefährlicher Fluide, wobei der Bausatz ein Rohranschlussstückfitting (60) nach Anspruch 8 und/oder ein Rohrfertigerfitting (10, 11, 12) nach Anspruch 9 oder 10 sowie ein Presswerkzeug umfasst.

## Revendications

1. Procédé d'installation d'un système de tuyaux à double paroi pour le transfert de fluides dangereux, le procédé comprenant :
la fourniture d'un ou de plusieurs raccords (10, 11, 12, 60) pour terminer ou diviser des tuyaux dans une tuyauterie à double paroi en acier, chacun desdits raccords comprenant un élément en acier tubulaire interne destiné à être joint à une extrémité du tuyau en acier interne d'un tuyau à double paroi et un élément tubulaire externe en acier entourant au moins partiellement l'élément tubulaire interne et espacé de celui-ci pour se joindre au tuyau en acier externe du tuyau à double paroi, chaque extrémité de l'élément tubulaire interne en acier du raccord (21, 71) s'étendant au-delà de l'extrémité correspondante de l'élément en acier tubulaire externe ;
la jonction de l'élément en acier tubulaire interne au tuyau tubulaire interne d'un tuyau à double paroi ; et
la jonction de l'élément en acier tubulaire externe au tuyau externe du tuyau à double paroi ;
**caractérisé en ce que** les éléments en acier tubulaire interne et externe sont joints respectivement *in situ* aux tuyaux à double paroi interne et externe par un procédé à froid en insérant une partie d'extrémité de chaque tuyau dans une partie d'extrémité de chaque élément en acier tubulaire, ou vice versa, pour fournir un accouplement mâle-femelle et appliquer une pression en une pluralité de points autour de l'accouplement femelle où il chevauche l'accouplement mâle pour comprimer l'accouplement femelle contre l'accouplement mâle afin de former un joint serti entre eux.

2. Procédé selon la revendication 1, comprenant en outre la fourniture d'un ou plusieurs éléments d'espacement (40) installés entre l'élément en acier tubulaire interne et externe pour fixer la position de l'élément interne par rapport à l'élément externe.

3. Procédé selon la revendication 1 ou la revendication 2, dans lequel le raccord fourni comprend un finisseur de tuyaux (10, 11, 12) destiné à fermer l'espace interstitiel du système à double paroi lors de l'utilisation pour permettre à l'espace d'être mis sous pression.

4. Procédé selon la revendication 3, comprenant en outre la fourniture de l'élément en acier tubulaire externe du finisseur de tuyaux avec un orifice obturable (50) pour introduire un gaz sous pression dans l'espace interstitiel.

5. Procédé selon l'une quelconque des revendications précédentes, dans lequel le raccord fourni comprend un connecteur à voies multiples, tel qu'un connecteur en forme de T (60), destiné à être joint à une pluralité de tuyaux internes pour combiner ou diviser un écoulement de fluide.

6. Procédé selon l'une quelconque des revendications précédentes, comprenant en outre la fourniture d'un moyen de surveillance de pression pour surveiller la pression dans l'espace interstitiel du système à double paroi lorsque les raccords sont joints aux tuyaux à double paroi et le système fermé et relier les moyens de surveillance de la pression au système de tuyaux à double paroi.

7. Procédé selon la revendication 6, dans lequel les moyens de surveillance de la pression sont reliés à un système d'alarme déclenché par une modification de la pression surveillée, le système d'alarme étant situé à proximité et/ou à distance du système de tuyaux à double paroi.

8. Raccord de connecteur de tuyau (60) destiné à être joint *in situ* à une tuyauterie d'un système de tuyaux à double paroi pour le transfert de fluides dangereux, ledit raccord comprenant :
un connecteur de tuyau en acier à voies multiples interne (70) comprenant une pluralité d'extrémités destinées à être jointes à une pluralité de tuyaux internes par sertissage afin de combiner ou diviser un écoulement de fluide à travers lesdits tuyaux et
un connecteur de tuyau en acier à voies multiples externe (80) de même configuration que le connecteur interne et intégralement à double paroi assemblé à celui-ci, comprenant une pluralité d'extrémité destinées à être jointes à une pluralité de tuyaux externes par sertissage,
les dimensions du connecteur externe (80) étant supérieures aux dimensions du connecteur interne (70) pour fournir un espace interstitiel entre les connecteurs internes et externes et entre les tuyaux internes et externes lorsqu'ils sont raccordés sur les connecteurs respectifs pour permettre une surveillance de la pression entre les tuyaux internes et externes lorsque l'espace entre les tuyaux internes et externes fait partie d'un système fermé ;
**caractérisé en ce que** :
un ou plusieurs joints toriques (91) sont portés à l'intérieur d'une ou de plusieurs des extrémités afin d'être joints par sertissage ; et
une ou plusieurs des extrémités destinées à être jointes par sertissage sont évasées pour faciliter l'insertion du tuyau à joindre.

9. Raccord de finisseur de tuyaux (10, 11, 12) destiné à être joint *in situ* à une tuyauterie à double paroi d'un système de tuyaux à double paroi pour le transfert de fluides dangereux, ledit raccord comprenant :
un tube en acier interne (20) ayant une première extrémité (21) destinée à être jointe à un tuyau en acier interne du système à double paroi par sertissage pour acheminer un fluide depuis un réservoir de fluide à travers le tube et une seconde extrémité (22) destinée à être jointe par sertissage à un tuyau de refoulement en acier pour acheminer le fluide du tube à une destination de livraison, et
un tube réducteur externe en acier (30) ayant une première extrémité (31) destinée à être jointe par sertissage à un tuyau en acier externe du système à double paroi et une seconde extrémité (32) de diamètre réduit par rapport à la première extrémité et scellée autour du tube en acier interne pour fermer le système à double paroi où le raccord est installé pour permettre la surveillance de la pression de l'espace interstitiel entre les tuyaux internes et externes ;
**caractérisé en ce que**
un ou plusieurs joints toriques (91) sont portés à l'intérieur d'une ou de plusieurs des extrémités afin d'être joints par sertissage ; et
une ou plusieurs des extrémités destinées à être jointes par sertissage (90) sont évasées pour faciliter l'insertion du tuyau à joindre.

10. Raccord de finisseur de tuyaux (10, 11, 12) selon la revendication 9, comprenant en outre un orifice obturable (50) pour introduire un gaz sous pression dans l'espace interstitiel.

11. Raccord de connecteur de tuyau (60) selon la revendication 8, ou raccord de finisseur de tuyaux (10, 11, 12) selon la revendication 9, comprenant en outre un élément d'espacement (40) installé entre l'élément en acier tubulaire interne et externe pour fixer la position de l'élément interne par rapport à l'élément externe.

12. Kit de pièces pour l'installation d'un système de tuyaux à double paroi dans une installation pour le transfert de fluides dangereux, ledit kit comprenant un ou plusieurs raccords parmi un raccord de connecteur de tuyau (60) selon la revendication 8 et un raccord de finisseur de tuyaux (10, 11, 12) selon la revendication 9 ou la revendication 10, et un outil de sertissage.
